Europäisches Patentamt

European Patent Office

Office européen des brevets

(19)

(11) Veröffentlichungsnummer: **0 064 609**
**B1**

(12) # EUROPÄISCHE PATENTSCHRIFT

(45) Veröffentlichungstag der Patentschrift:
11.06.86

(51) Int. Cl.⁴: **G 01 J 5/08**

(21) Anmeldenummer: 82103159.8

(22) Anmeldetag: 15.04.82

(54) Vorrichtung zur Messung der Temperaturverteilung entlang der Innenwände der Heizzüge von Verkokungsöfen.

(30) Priorität: 07.05.81 DE 3118080

(43) Veröffentlichungstag der Anmeldung:
17.11.82 Patentblatt 82/46

(45) Bekanntmachung des Hinweises auf die Patenterteilung:
11.06.86 Patentblatt 86/24

(84) Benannte Vertragsstaaten:
BE FR GB IT NL

(56) Entgegenhaltungen:
DE - A - 2 338 532
DE - A - 3 000 640
DE - B - 2 748 651
DE - U - 1 930 565

"Ironmaking Proceedings" Vol. 35, S. 31-35, St. Louis, US April 1977

(73) Patentinhaber: Bergwerksverband GmbH,
Franz-Fischer-Weg 61, D-4300 Essen 13 (DE)

(72) Erfinder: Reger, Jürgen, Teckstrasse 30,
D-7441 Kohlberg (DE)
Erfinder: Eisenhut, Werner, Dr. Ing.,
Wilhelm-Melchert-Strasse 1, D-4300 Essen (DE)
Erfinder: Sarangi, Bhubaneswar, Dr. Ing.,
Siepenheide 12, D-4350 Recklinghausen (DE)
Erfinder: Reger, Richard, Zollernstrasse 11,
D-7441 Kohlberg (DE)

## Beschreibung

Die Erfindung betrifft eine Vorrichtung zum Messen der Temperaturverteilung entlang der Innenwände der Heizzüge von Verkokungsöfen, die ein Strahlungspyrometer mit nachgeschalteter Auswerteeinrichtung und eine an einem Ende innerhalb einer Meßlanze untergebrachte Strahlungsoptik aufweist, die die Wärmestrahlen von der Meßstelle an das am anderen Ende angeordnete Pyrometer weiterleitet.

Bei Messungen von Temperaturverteilungen kommt es auf eine möglichst gute Auflösung an. Bei engen schachtförmigen Räumen wie den Heizzügen von Verkokungs- und ähnlichen Öfen ist die Meßsituation besonders schwierig, da einerseits relativ hohe Temperaturen von z.B. mehr als 1.000° C zu erfassen sind und das Längendurchmesserverhältnis solcher Räume außerordentlich groß ist, was eine gute Temperaturauflösung in Richtung der Längsausdehnung der Räume besonders schwierig macht.

Für die Messung der Temperaturverteilung von Heizzügen in Verkokungsöfen ist die eingangs genannte Vorrichtung allgemeiner Stand der Technik, wie beispielsweise aus "Ironmaking Proceedings", Vol. 35, s. 31-35, St. Louis, April 1977, hervorgeht, wird dabei ein Temperaturmeßkopf bis zum Boden in dem zu messenden Heizzug abgesenkt. Diese Vorgehensweise bereitet bereits bei 4 m tiefen Heizzügen erhebliche Schwierigkeiten, da diese nur durch eine ca. 2 m dicke Decke von oben zu erreichen sind. Dies führt zu sehr unhandlichen Meßwagen und erfordert einen erheblichen Zeitaufwand und bedingt dadurch einen unerwünschten Abkühlungseffekt. Eine solche Meßsonde behindert auch wegen ihrer Ausmaße den Betrieb der oberhalb der Koksofendecke fahrenden Füllwagen. Schließlich muß die Meßsonde gegen die hohen Temperaturen durch Vergoldung ihrer Außenfläche geschützt werden.

Zur Beobachtung der Temperaturentwicklung im Inneren eines geschlossenen Raumes, beispielsweise eines Hochofens, ist es bereits bekannt, kleine Beobachtungsöffnungen in dessen Wand vorzusehen in die eine Umlenkeinrichtung für den Beobachtungsstrahlengang mit einem beweglichen, optisch umlenkenden Glied versehen ist, dem ein empfindliches Temperaturmeßgerät zugeordnet ist, das die jeweiligen örtlichen Temperaturen in dem geschlossenen Raum zu registrieren bzw. zu beobachten gestattet. Das dort verwendete Strahlungspyrometer mit Auswerteeinrichtung, einem motorisch angetriebenen Schwenkspiegel einschließlich Schwenkhebel und Rückholfeder, einer Schwenkachse senkrecht zum Strahlengang, festen Spiegeln und einer strahlungsdurchlässigen Scheibe ist für die Temperaturmessung von Feuerraumoberflächen geeignet. Sie ist zweckbedingt sehr kompliziert aufgebaut, denn die optische Erfassung der Feuerraumoberfläche erfolgt in einem spiralförmigen Bewegungsablauf und kontinuierlich. Dieses Meßprinzip ist von seinem Aufbau und von seiner Bewegungskinetik her nicht geeignet, Längsstreifen auf der Wandung der Heizzüge von Verkokungsöfen in diskreten Schritten zu erfassen (DE-B-27 48 651).

Weiterhin sind bereits aus den Druckschriften DE-A-23 38 532 und DE-U-19 30 565 Lichtleiter bekannt, die dazu verwendet werden den Wärmestrahlengang von Temperaturmeßvorrichtungen von der Meßstelle zu der auswertenden Stelle umzulenken.

Die Aufgabe der Erfindung besteht allgemein in der Beseitigung der oben näher bezeichneten Nachteile. Insbesondere soll eine leicht handhabbare, möglichst kleine und leichte Vorrichtung der eingangs genannten Art geschaffen werden, mit der bei geringstmöglichem Personal- und Materialaufwand eine hohe Temperaturauflösung in kurzer Meß- und Einsatzzeit bei möglichst geringen Wärmeverlusten erzielt werden.

Die Erfindung löst die Aufgabe durch die kennzeichnenden Merkmale des Anspruches 1. Eine Weiterbildung der Vorrichtung ist in Anspruch 2 niedergelegt.

Die Strahlungsoptik braucht wegen ihrer Anordnung an einem der Enden des zu messenden Raumes also nicht direkt den hohen, darin herrschenden Temperaturen ausgesetzt zu werden. Mit ihr ist es möglich, von einem festen Punkt aus einer allerdings extremen Position heraus die Temperaturverteilung über die gesamte zu messende Wandlänge zu erfassen, ohne daß während der Messung die Optik als ganzes bewegt werden muß. Dadurch treten weder Erschütterungen noch andere, durch einen Absenkvorgang bedingte Fehler auf das Meßergebnis auf.

Die Präzision der Messung wird gleichzeitig dadurch erhöht, daß die Schwenkachse des Spiegels die optische Achse der Strahlungsoptik rechtwinklig schneidet, sie also in der reflektierenden Ebene des Spiegels liegt.

Weiterhin wird eine Verbesserung der Auflösung und Verkleinerung des erfaßten Meßfleckes erreicht, wenn ein fester Spiegel im Strahlengang zwischen dem auszuwertenden Strahlengang und dem schwenkbaren Spiegel angeordnet ist. Hierdurch ist es möglich, den Schwenkwinkel des schwenkbaren Spiegels erheblich zu vermindern, z. B. größenordnungsmäßig auf 20° bei einem etwa 4 m langen Raum bei einem kürzesten Wandabstand der Strahlungsoptik von nur 35 cm. Dabei wird der auszuwertende Strahlengang und der schwenkbare Spiegel im größtmöglichen Querabstand - bezogen auf die Längsachse des Raumes - angeordnet. Hierdurch wird ein außerordentlich kompakter Aufbau der Strahlungsoptik und ein großer meßbarer Winkelbereich erzielt.

Die die Strahlungsoptik schützende, strahlungsdurchlässige Scheibe wird im Strahlengang zwischen der zu messenden Wand und dem schwenkbaren Spiegel angeordnet, um unter anderem die Strahlungsoptik zu schützen. Dabei ist eine Winkelstellung von etwa 45° zur zu messenden Wand vorgesehen; dies vor allem auch in bezug auf möglichst kleine Abmessungen des die Strahlungsoptik aufnehmenden Meßkopfes.

Das Schwenken des Spiegels wird durch einen Schrittmotor in besonders präziser Weise möglich.

Durch den, am schwenkbaren Spiegel angreifenden, von der Stelleinrichtung betätigten Schwenkhebel kann den engen räumlichen Verhältnissen im Meßkopf besonders gut Rechnung getragen werden.

Eine am schwenkbaren Spiegel angreifende, mit der Stelleinrichtung zusammenwirkende Feder sorgt dafür, daß der schwenkbare Spiegel stets spielfrei der Bewegung der Stelleinrichtung folgen kann.

Wegen der großen Distanz der zum Meßort hin zu verfahrenden Strahlungsoptik ist es bei den engen Zugangsverhältnissen zum Meßort von besonderem Vorteil, daß ein an sich bekannter Lichtleiter für die auszuwertende Strahlung verwendet wird.

Das Verfahren der Strahlungsoptik zum Meßort ermöglicht die diese an einem ihrer Enden aufnehmende rohrförmige Meßlanze. Hierdurch ist ein genaues Positionieren der Strahlungsoptik am Meßort möglich. Da die Meßlanze eine mit einem Kühlmittel gekühlte Wandung aufweist, werden alle in ihr angeordneten Einrichtungen gegenüber auch außerhalb des eigentlichen, zu messenden Raumes auftretenden, erhöhten Temperaturen geschützt. Hierdurch wird außerdem eine gewisse Temperaturkonstanz im Inneren der Meßlanze beim Verfahren von einem Meßort zu einem anderen erzielt.

Eine gemäß einer Weiterbildung der Erfindung die Strahlungsoptik an den Einsatzort verfahrende Lafetteneinrichtung erleichtert erheblich den Transport und die Positionierung der Strahlungsoptik. Der außerhalb des Raumes in seiner Längsrichtung geführte Lafettenwagen zur Aufnahme des von der Strahlungsoptik abgewandten Endes der Meßlanze bewirkt ein sicheres Verfahren der Strahlungsoptik zum Meßort.

Besonders bei räumlich beengten Verhältnissen, wie sie durch Transporteinrichtungen auf der Decke einer Koksofenbatterie gegeben sind, erleichtert die quer zur Führungsrichtung des Lafettenwagens umklappbare Führungsschiene die Feinpositionierung.

Die Feinpositioniereinrichtungen der Meßlanze erlauben eine exakte Positionierung der Strahlungsoptik an verschiedenen, in ihrer räumlichen Konstellation leicht voneinander abweichenden Meßorten. Ein solcher Fall ist z. B. beim Einsatz auf Koksofenbatterien aufgrund unterschiedlichen Wärmeverzuges gegeben. Dabei kann nicht nur die Meßlanze als ganzes bei fester Ausrichtung im Raume in einer Ebene quer zu dieser Ausrichtung feinpositioniert werden, sondern es ist auch ein definiertes Verkippen der Meßlanze in bezug auf die normale Ausrichtung möglich.

Weitere Ziele, Merkmale, Vorteile und Anwendungsmöglichkeiten der vorliegenden Erfindung ergeben sich aus der nachfolgenden Beschreibung der Ausführungsbeispiele anhand der beiliegenden Zeichnungen.

In den Figuren zeigen:

Fig. 1 den schematischen Aufbau einer erfindungsgemäßen Vorrichtung, zusammen mit dem zu messenden Raum, zum Teil im Schnitt,

Fig. 2 eine erfindungsgemäße Strahlungsoptik, zum Teil im Schnitt, als vergrößerter Ausschnitt der Fig. 1 sowie

Fig. 3 eine perspektivische Darstellung einer erfindungsgemäßen Lafetteneinrichtung - zum Teil im Schnitt.

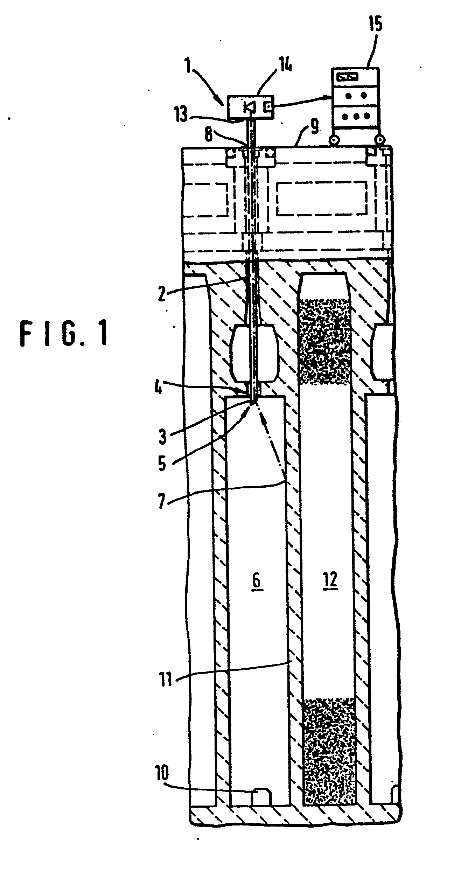

In Fig. 1 ist ein Strahlungspyrometer 1 mit einer Meßlanze 2 und einer Strahlungsoptik 3 an ihrem Ende 4 versehen. Die Strahlungsoptik 3 befindet sich am Ende 5 (oberes Ende) des Raumes 6, bei welchem die Temperaturverteilung seiner Innenwand 7 zu messen ist.

Der hier als Heizzug einer Kokosfenbatterie dargestellte Raum 6 mit einer Länge von ca. 4 und einer Breite von ca. 0,7 m ist durch ein Schauloch 8 in der Decke 9 der Koksofenbatterie über einen etwa 2 m langen Verbindungskanal zu erreichen. Über einen Düsenstein 10 erfolgt der Zutritt von Verbrennungsgas in den Raum 6, dessen aus Läufersteinen gebildete Heizwand 11 eine Abtrennung zur Verkokungskammer 12 darstellt.

Am von der Strahlungsoptik 3 abgewandten Ende 13 der Meßlanze 2 ist im wesentlichen der optische Teil 14 der Auswerteeinrichtung 14, 15 angeordnet.

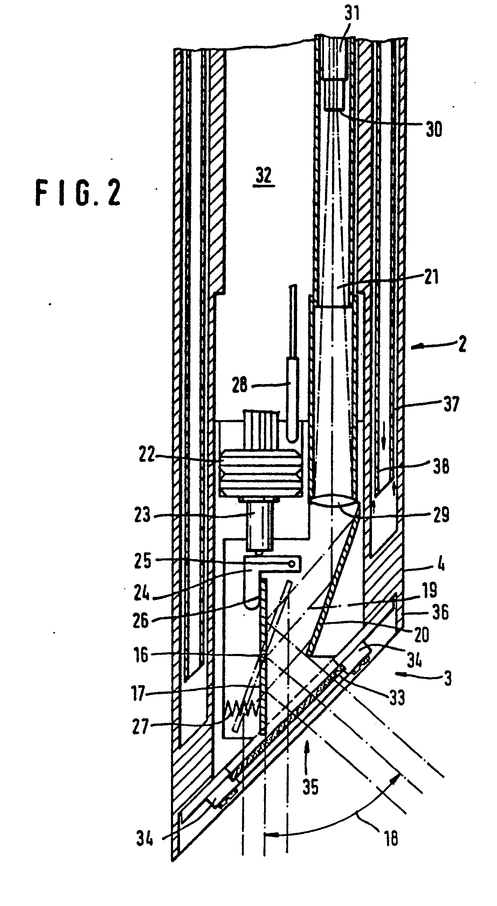

In Fig. 2 ist die Strahlungsoptik 3 am Ende 4 der Meßlanze 2 untergebracht und beinhaltet einen um seine Achse 16 schwenkbaren Spiegel 17 zur optischen Erfassung des gesamten Winkelbereiches 18, der durch die Länge der zu messenden Wand und den geringsten Wandabstand der Strahlungsoptik gegeben ist. Dabei schneidet die Schwenkachse 16 des Spiegels 17 die optische Achse 19 der Strahlungsoptik 3 im rechten Winkel. Ein fester Spiegel 20 ist im Strahlengang zwischen dem auszuwertenden Strahlengang 21 und dem schwenkbaren Spiegel 17 so angeordnet, daß letzterer in der zur Erfassung des entferntesten Meßpunktes gegebenen Spiegelposition Parallelität zwischen den beiden Spiegeln herrscht. - Die Strahlungsoptik 3 umfaßt darüber hinaus eine vorzugsweise als Schrittmotor ausgebildete Stelleinrichtung 22 für den Spiegel 17, mit welcher über eine Schubstange 23 ein als Winkelhebel ausgebildeter Schwenkhebel 24 um dessen Achse 25 verstellt wird. Zur Erfassung des nächstliegenden Meßpunktes ist der Spiegel 17 bevorzugt parallel zur Längsachse der Meßlanze 2 ausgerichtet und liegt am Schenkel 26 des Schwenkhebels 24 an. In der Position für den entferntesten Meßpunkt, der vorzugsweise in axialer Richtung der Meßlanze 2 liegt, braucht der Spiegel 17 z. B. nur etwa 20° in bezug auf die andere Extremposition verschwenkt zu sein. Eine Feder 27 sorgt für ständigen Andruck des Spiegels 17 am Schwenkhebel 24.

Die Stelleinrichtung 22 ermöglicht ein präzises und in definierten Schritten erfolgtes produzierbares Verschwenken des Spiegels 17, so daß eine präzise Zuordnung der in den einzelnen Spiegelstellungen aufgefangenen Strahlung zu konkreten Flächenbereichen der zu messenden Wand möglich ist.

Ein Temperaturfühler 28, z. B. ein Thermoelement, ermöglicht die Überwachung und Vermeidung von Übertemperaturen im Bereich der Strahlungsoptik 3.

Eine Sammellinse 29 fokussiert jetzt die vom Spiegel 20 ausgehenden Strahlen des auszuwertenden Strahlenganges 21 auf das Ende 30 eines Lichtleiters 31, der im Innenraum 32 der Meßlanze 2 zur Auswerteeinrichtung 14 geführt wird.

Eine für die zu messende Strahlung durchlässige, vorzugsweise planparallele Scheibe 33 aus z. B. Quarzglas ist mit Haltemitteln 34, z. B. Schrauben, an der unteren Stirnfläche 35 der Meßlanze 2 schräg zu deren Achse befestigt. Dadurch entsteht ein auf die zu messende Wand gerichtetes Sichtfenster für die Strahlungsoptik 3, welches aus durch einen ausblendenden Spalt quer zum Winkelbereich 18 eingeengt sein kann, so daß durch ein Drehen der Meßlanze verschiedene, sehr schmale Flächenstreifen der zu messenden Wand erfaßt werden können. Ein stirnseitiger Kragen 36 der Meßsonde 2 schützt die Stirnfläche 35 vor Beschädigungen.

Durch Ausgestaltung der Meßlanze 2 als doppelwandiges Rohr entsteht ein Kühlraum 37, in den Kühlmittelzuflußrohre 38 bis in den Bereich der Strahlungsoptik 3 abgesenkt sind, wodurch letzterer auf einer vergleichsweise geringen Temperatur gehalten werden kann.

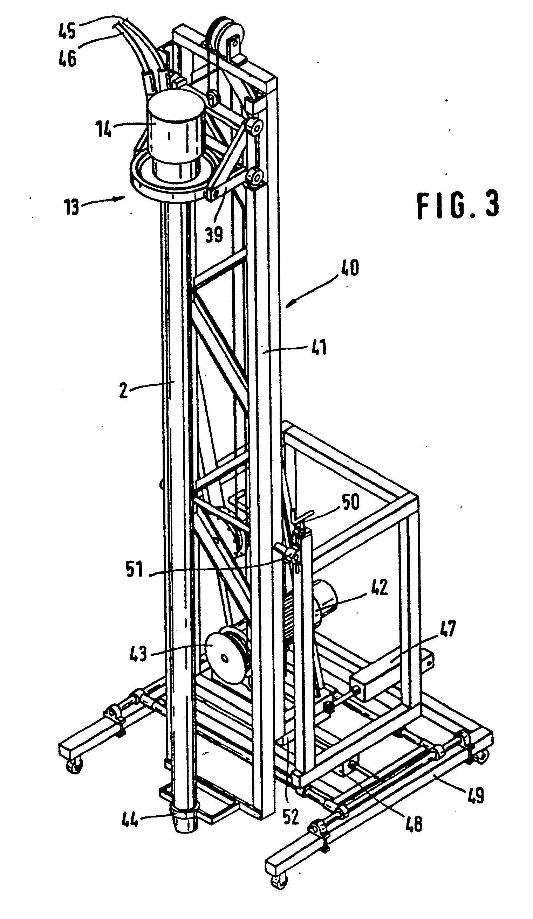

In Fig. 3 wird die Meßlanze 2 an ihrem Ende 13 zusammen mit der optischen Auswerteeinrichtung 14 von einem Lafettenwagen 39 der Lafetteneinrichtung 40 gehalten, wobei der Lafettenwagen 39 in Führungsschienen 41 geführt wird.

Mit Hilfe eines Motors 42 und einer davon angetriebenen Seiltrommel 43 kann der Lafettenwagen 39 verfahren werden. Dabei sorgt eine Gleitführung 44 für eine sichere Ausrichtung der Meßlanze 2. Kühlmittelschläuche 45, 46 sorgen für die Zu- und Abfuhr des Kühlmittels, eine nicht dargestellte Kabelverbindung führt von der optischen Auswerteeinrichtung 14 zu einer Steuer- und Registriereinrichtung 15, die als Kompakteinheit auch ein Kühlaggregat für das Kühlmittel aufnehmen kann.

Besonders empfehlenswert ist der Einsatz besonders leistungsfähiger und leichter Kühlmittel, wie Frigen.

Feinpositioniereinrichtungen 48 und 52 auf dem verfahrbaren Rahmengestell 49 ermöglichen eine Lanzenpositionierung - in einer Ebene - bei gleichbleibender Ausrichtung derselben, während die Feinpositioniereinrichtungen 47 und 50 eine Änderung der Lanzenausrichtung ermöglichen, z. B. in Form einer Anpassung der Verfahrrichtung der Meßlanze durch schräg verlaufende öffnungen.

An ihrem Ende 13 (oberes Ende) kann die Meßlanze 2 auch um ihre eigene Achse verdreht werden, um der Strahlungsoptik 3 die gewünschte Ausrichtung auf einen schmalen Wandstreifen zu vermitteln.

Ein Drehlager 51 quer zur Führungsschiene 41 ermöglicht das Umklappen derselben, sobald die Lanze 2 ganz aus dem zu messenden Raum ausgefahren worden ist. Der Meßbereich und die Auflösung des Strahlungspyrometers, z. B. eines Spektralpyrometers, kann frei nach der zu bewältigenden Aufgabe gewählt werden. Ebenso ist es möglich, durch eine an sich bekannte elektronische Auswertung der Meßergebnisse sowohl eine kontinuierliche Temperaturmessung entlang des gesamten erfaßten Meßflächenstreifens als auch eine punktuelle Temperaturerfassung durchzuführen.

**Patentansprüche**

1. Vorrichtung zum Messen der Temperaturverteilung entlang der Innenwände (7) der Heizzüge von Verkokungsöfen, die ein Strahlungspyrometer (1) mit nachgeschalteter Auswerteeinrichtung (14, 15) und eine an einem Ende innerhalb einer kühlbaren Meßlanze (2) untergebrachte Strahlungsoptik (3) aufweist, die die Wärmestrahlen von der Meßstelle an das am anderen Ende der Meßlanze angeordnete Pyrometer weiterleitet, gekennzeichnet durch folgende Merkmale:

1. Die Strahlungsoptik (3) ist in einer als Doppelrohr ausgebildeten, Meßlanze (2) angeordnet.

1.1 Die Meßlanze (2) weist an ihrem die Strahlungsoptik enthaltenden Ende eine abgeschrägte Stirnfläche (35) auf, in der eine strahlungsdurchlässige Scheibe (33) als Sichtfenster angeordnet ist;

1.2 Zur Erfassung der Temperatur im Bereich der Strahlungsoptik ist eine Temperaturmeßeinrichtung (28) innerhalb der Meßlanze (2) angeordnet;

1.3 Die Strahlungsoptik (3) besteht aus einem um eine in der Spiegelebene liegende Schwenkachse (16) schwenkbaren ersten Spiegel (17), dem ein feststehender zweiter Spiegel (20) zugeordnet ist, der die Wärmestrahlen über eine Sammellinse (29) und einen Lichtleiter (31) dem Pyrometer (14) zuführt; und

1.4 Der schwenkbare erste Spiegel (17) ist über einen Schrittmotor (22), der einen am ersten Spiegel angreifenden Schwenkhebel (24) bewegt, schrittweise verstellbar. Vorrichtung nach Anspruch 1, dadurch gekennzeichnet, daß sie einer Positioniereinrichtung zugeordnet ist, die aus einer verfahrbaren Lafetteneinrichtung (40) besteht, an der ein Lafettenwagen (39) und Feinpositioniereinrichtungen (47, 48, 50, 52) angeordnet sind.

## Claims

1. Device for measuring the temperature distribution along the inner walls (7) of the heating flues of coking ovens, comprising a radiation pyrometer (1) with an evaluation device (14, 15) arranged downstream, and a radiation optical system (3) which is disposed at one end inside a coolable measuring lance (2) and which conducts the heat rays from the measuring point to the pyrometer arranged at the other end of the measuring lance, characterised by the following features:

1. the radiation optical system (3) is arranged in a measuring lance (2) which is formed as a double tube;

1.1 at its end containing the radiation optical system, the measuring lance (2) comprises a bevelled end face (35) in which a radiation-permeable disc (33) is arranged as a window;

1.2 a temperature measurement device (28) is arranged inside the measuring lance (2) for detecting the temperature in the region of the radiation optical system.

1.3 the radiation optical system (3) comprises a first mirror (17) which is pivotable about a pivot axis (16) lying in the mirror plane and which is associated with a fixed second mirror (20), which guides the heat rays through a focusing lens (29) and a photoconductor (31) to the pyrometer (14); and

1.4 the pivotable first mirror (17) can be variably adjusted by means of a stepping motor (22), which moves a pivoted lever (24), which acts upon the first mirror.

2. Device according to claim 1, characterised in that it is associated with a positioning device, which comprises a displaceable mounting device (40), on which a mounting carriage (39) and precision position devices (47, 48, 50, 52) are arranged.

## Revendications

1.- Dispositif pour la mesure de la répartition de la température le long des parois intérieures (7) des carneaux de fours à coke, qui comporte un pyromètre à radiation (1) avec un équipement d'évaluation (14, 15) monté à sa suite et une optique à radiation (3) logée à une extrémité à l'intérieur d'une lance de mesure (2) refroidissable, laquelle optique transmet le rayonnement thermique du point de mesure au pyromètre disposé à l'autre extrémité de la lance de mesure, caractérisé par les points suivants:

1. L'optique à radiation (3) est disposée dans une lance de mesure (2) refroidissable, conformée en tuyau double;

1.1 la lance de mesure (2) présente à son extrémité comprenant l'optique à radiation, une surface frontale oblique (35) dans laquelle est disposée une vitre (33) perméable au rayonnement, comme fenêtre d'observation;

1.2 pour saisir la température dans la région de l'optique à radiation, un équipement de mesure de la température (28) est disposé à l'intérieur de la lance de mesure (2);

1.3 l'optique à radiation (3) consiste en un premier miroir (17) pouvant pivoter autour d'un axe de pivotement (16) se trouvant dans le plan du miroir, auquel est associé un deuxième miroir fixe (20) qui conduit le rayonnement thermique en passant par une lentille convergente (29), et par un conducteur de lumière (31) au pyromètre (14); et

1.4 le premier miroir pivotant (17) est déplaçable pas à pas par un moteur d'avancement pas à pas (22) qui meut un levier de pivotement (24) appliqué au premier miroir.

2.- Dispositif suivant la revendication 1, caractérisé en ce qu'il est associé à un équipement de positionnement qui consiste en un équipement à affût (40) déplaçable, sur lequel sont agencés un chariot d'affût (39) et des équipements de positionnement de précision (47, 48, 50, 52).

F I G. 1

FIG.2

FIG. 3